# NEUE EUROPÄISCHE PATENTSCHRIFT

(11) **EP 1 285 098 B2**
(45) Veröffentlichungstag und Bekanntmachung des Hinweises auf die Entscheidung über den Einspruch: **23.03.2011**
(45) Hinweis auf die Patenterteilung: 03.12.2003
(21) Anmeldenummer: 01933964.7
(22) Anmeldetag: 15.05.2001
(51) Int. Cl.: C21D 9/30, C21D 1/10

(54) **VERFAHREN UND VORRICHTUNG ZUM INDUKTIVEN HÄRTEN VON KURBELWELLEN**
METHOD AND DEVICE FOR INDUCTION HARDENING CRANKSHAFTS
METHODE ET DISPOSITIF DE DURCISSEMENT PAR INDUCTION DE VILEBREQUINS

(30) Priorität: 19.05.2000 DE 10024990
(43) Veröffentlichungstag der Anmeldung: 26.02.2003
(73) Patentinhaber: Maschinenfabrik Alfing Kessler GmbH, 73433 Aalen-Wasseralfingen (DE)
(72) Erfinder: ZAHN, Andreas, 79359 Riegel (DE)
(74) Vertreter: Lorenz, Werner
(86) Internationale Anmeldenummer: PCT/EP2001/005491
(87) Internationale Veröffentlichungsnummer: WO 2001/090426

(56) Entgegenhaltungen:
- EP-A- 0 520 220
- DE-A- 2 205 513
- DE-A1- 4 029 724
- DE-C- 3 842 808
- FR-A- 866 632
- GB-A- 822 544
- US-A- 4 123 644
- US-A- 6 013 904
- XIAO RONG-SHI ET AL: "LASER SURFACE HEAT TREATMENT OF CRANKSHIFT" , COLLOQUE INTERNATIONAL SUR LE SOUDAGE ET LA FUSION PAR FAISCEAUX D'ELECTRONS ET LASER / INTERNATIONAL CONFERENCE ON WELDING AND MELTINGBY ELECTRON AND LASER BEAMS. LA BOULE, JUNE 14 - 18, 1993, ENNERY, INSTITUT DE SOUDURE, FR, VOL. TOME 2 COLLOQUE 5, , PAGE(S) 433-440 XP000379803 Seite 434 -Seite 435; Abbildungen 2,6

## Beschreibung

Die Erfindung betrifft eine Vorrichtung zum induktiven Härten von Pleuelzapfen von Kurbelwellen des Split-Pin-Typs mit wenigstens zwei Hauptlagern, wobei wenigstens zwei Pleuelzapfen unmittelbar nebeneinander liegen.

Eine gattungsgemäßes Vorrichtung ist aus der US-PS 6,013,904 bekannt. Hierbei wird bei einer Kurbelwelle des Split-Pin-Types eine Härtung mit nachgeführten Induktoren durchgeführt, wobei die Kurbelwelle an ihren beiden Enden eingespannt und mit einer bestimmten, jedoch an sich variablen Drehzahl rotiert. Um bei dem mit dieser Vorrichtung durchgeführten Verfahren neben den Hauptlagern auch die Pleuelzapfen zu härten, ist der Induktor an einem Handhabungsgerät angeordnet, welches der Rotationsbewegung des Pleuelzapfens kontinuierlich folgt. Hierdurch ist ein berührungsloses Härten der Kurbelwelle möglich, was zu einer insgesamt kürzeren Bearbeitungszeit beim Härten der Kurbelwelle führen soll.

Allerdings ist ein solches ständiges Nachführen des Induktors sehr aufwendig sowie verschleiß- und störanfällig. Durch das eventuelle Auftreten von Schlägen, also Werkstückungenauigkeiten, kann es noch immer zu unerwünschten Berührungen des Werkstücks mit dem Werkzeug kommen. Des weiteren ist für das ständige Nachführen des Induktors eine sehr aufwendige Steuerung erforderlich. Schließlich stellen das oben beschriebene Verfahren und die zugehörige Vorrichtung sehr hohe Anforderungen an das Bedienungspersonal, was zwangsläufig zu höheren Lohn- und somit Werkstückkosten führt.

Einen ähnlichen Stand der Technik zeigt auch die DE 40 29 724 C2, wobei hier der Kopplungsabstand zwischen dem Werkzeug und dem Werkstück im Gegensatz zu der US-PS 6,013,904 so eingestellt werden soll, daß er an einen hohen Wärmeabfluß aufweisenden Werkstückteiloberflächen kleiner ist als an einen niedrigen Wärmeabfluß aufweisenden Werkstückteiloberflächen. Hierdurch soll ein homogener Härteverlauf in einem schnellen Takt, d.h. in kurzer Zeit, erreicht werden. Ein Härtungsverfahren wie eingangs erwähnt ist bekannt aus GB-A-822 544. Es ist dort erwähnt, dass ein Induktor das Hauptlager der Kurbelwelle umschließen kann, über diese Arbeitsweise jedoch nichts ausgesagt ist. Durch das Verwenden der Mittelachse des wenigstens einen zu härtenden Pleuelzapfens als Achse für die Rotationsbewegung der Kurbelwelle, d.h. durch die Verlegung der Mittelachse des Pleuelzapfens zu der Rotationsachse der Kurbelwelle, führt der jeweils zu härtende Bereich der Kurbelwelle, im vorliegenden Fall der Pleuelzapfen, keine exzentrische Bewegung um einen Punkt mehr aus, sondern eine rein rotatorische Bewegung um seine Mittelachse oder, mit anderen Worten, eine zur Rotationsmittelachse koaxial-zentrische Bewegung. Aus diesem Grund muß der Induktor dem zu härtenden Pleuelzapfen nicht mehr nachgeführt werden, sondern er kann während des gesamten Härtevorgangs für den einzelnen Pleuelzapfen an ein und derselben Stelle verbleiben. Hierdurch ergibt sich eine sehr viel einfachere Beherrschbarkeit des Verfahrens, da keine ständigen Nachführbewegungen notwendig sind und vorteilhafterweise sowohl eine einfachere Steuerung möglich ist als auch die Bewegung der mechanischen Teile auf ein Minimum reduziert wird.

Allerdings weisen diese Vorrichtung und das zugehörige Verfahren ähnliche Nachteile wie bereits oben angeführt auf.

Es ist daher Aufgabe der vorliegenden Erfindung, eine Vorrichtung zum induktiven Härten der Pleuelzapfen von Kurbelwellen des Split-Pin-Typs zu schaffen, mittels welchem ein berührungsloses Härten bei vergleichsweise niedrigem Aufwand möglich ist. Zugleich soll ein möglichst geringer Werkzeugverschleiß und eine einfache Bedienbarkeit gegeben sein.

Erfindungsgemäß wird diese Aufgabe durch die in Anspruch 1 genannten Merkmale gelöst.

Durch den Einsatz eines berührungslos arbeitenden Induktors, der den zu härtenden Zapfen nur an der Hälfte seines Umfangs umschließt, entsteht ein verhältnismäßig einfaches und somit bedienungsfreundliches und fehlerunanfälliges Verfahren, welches zu einem geringen Verschleiß des Induktors und somit auch zu geringen Stillstandszeiten bei der Durchführung des Verfahrens führt. Erfindungsgemäß ist nunmehr ein berührungsloses Härten der Kurbelwelle möglich, was zusätzlich zu einem geringeren Verschleiß des Induktors führt, kürzere Heizzeiten und somit einen Gewinn an Taktzeit ermöglicht und außerdem geringere Wärmeeinflußzonen mit sich bringt. Die Rotation während des Härtens führt vorteilhafterweise zu einer sehr homogenen Härtezone. Durch die dabei vorhandene verhältnismäßig große Umschlingung des Pleuelzapfens durch den Induktor entsteht ein Freiraum im Kopplungsmaß, also dem Abstand zwischen der Kurbelwelle und dem Induktor. Dadurch kann gegebenenfalls ein auftretender Rundschlag der Kurbelwelle innerhalb gewisser Grenzen kompensiert werden.

Das erfindungsgemäße Verfahren kann vorteilhafterweise auf die verschiedensten Arten und mit den verschiedensten Automatisierungsgraden durchgeführt werden, was zu einer sehr großen Flexibilität bei der Härtung von Kurbelwellen führt.

Beim Härten von Kurbelwellen mit mehreren, versetzt zueinander angeordneten Pleuelzapfen, kann in einer besonders vorteilhaften Ausführungsform der Erfindung vorgesehen sein, daß zum Härten des versetzt zu dem ersten Pleuelzapfen angeordneten zweiten Pleuelzapfens die Kurbelwelle um einen dem Winkel zwischen dem ersten Pleuelzapfen und dem zweiten Pleuelzapfen entsprechenden Winkel verschwenkt wird. Da die angesprochenen Winkel zwischen den Pleuelzapfen stets bekannt sind, ist hierbei eine sehr hohe Präzision möglich, die zu einem guten Härteergebnis führt. Selbstverständlich kann diese Vorgehensweise auch vom zweiten auf den dritten und allgemein jeweils auf den nachfolgenden Pleuelzapfen übertragen werden.

Wenn die zu härtende Kurbelwelle mehrere miteinander fluchtende Pleuelzapfen aufweist, so kann es einerseits vorteilhaft sein, diese mittels eines Induktors zu härten, wobei der Induktor dann nach dem Härten eines Pleuelzapfens um einen entsprechenden Weg in axialer Richtung verfahren werden muß. Alternativ hierzu ist es auch möglich, mehrere miteinander fluchtende Pleuelzapfen mittels einer entsprechenden Anzahl von Induktoren gleichzeitig zu härten. Je nach Ausführung der zu härtenden Kurbelwelle und der davon abhängigen Möglichkeit, Induktoren vorzusehen, wird eine der beiden genannten Möglichkeiten vorteilhafter sein.

Um eine möglichst gleichmäßige wärmeverteilung innerhalb der gesamten erwärmten Bereich der Kurbelwelle zu erreichen, kann in einer weiteren vorteilhaften Ausführungsform der Erfindung vorgesehen sein, daß entsprechend der geometrischen Form der sich an den zu härtenden Pleuelzapfen anschließenden Kurbelwellenwange die Leistung des Induktors verändert wird.

Eine Vorrichtung zur Durchführung des Verfahrens ergibt sich aus den Merkmalen von Anspruch 8.

Durch den wenigstens einen Induktor, die Rotationseinrichtung und die erfindungsgemäße Verstelleinrichtung ergibt sich eine, gemessen an bereits bekannten Härtevorrichtungen für Kurbelwellen, einfach und damit bedienungsfreundlich aufgebaute Vorrichtung, bei der unter anderem auch aufgrund des berührungslosen Härtevorgangs ein nur geringer Wartungsaufwand erforderlich ist.

Eine sehr große Wärmeeinbringung in den zu härtenden Bereich der Kurbelwelle ist gegeben, wenn in einer vorteilhaften Ausführungsform der erfindungsgemäßen Vorrichtung der Induktor den zu härtenden Pleuelzapfen wenigstens an der Hälfte seines Umfangs umschließt.

Eine sehr einfache und kostengünstig zu fertigende Ausführung des Induktors kann dadurch gegeben sein, daß der wenigstens eine Induktor durch maschinelle Fertigung hergestellt ist.

In einer weiteren vorteilhaften Ausgestaltung der Erfindung kann eine Schwenkeinrichtung vorgesehen sein, welche in der

Lage ist, die Kurbelwelle um einen bestimmten Winkel um ihre Mittelachse zu verschwenken.

Hierdurch ist es bei Kurbelwellen mit versetzt zueinander angeordneten Pleuelzapfen sehr einfach möglich, den jeweils zu härtenden Pleuelzapfen in die Rotationsachse der Härtevorrichtung einzuschwenken.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: eine perspektivische Ansicht einer ersten Ausfüh- rungsform der Vorrichtung zur Durchführung des Ver- fahrens zum induktiven Härten von Kurbelwellen;
- Fig. 2: eine Seitenansicht der Vorrichtung aus Fig. 1;
- Fig. 3: eine Draufsicht auf die Vorrichtung aus Fig. 1;
- Fig. 4: einen Schnitt nach der Linie IV-IV aus Fig. 3;
- Fig. 5: eine Vorderansicht der Vorrichtung aus Fig. 1;
- Fig. 6: eine perspektivische Ansicht der Vorrichtung aus Fig. 1, bei der sich der Induktor in Eingriff mit einem Pleuelzapfen befindet;
- Fig. 7: eine Seitenansicht der Vorrichtung aus Fig. 6;
- Fig. 8: eine perspektivische Ansicht der Vorrichtung aus Fig. 1 und Fig. 6, bei der sich der Induktor in Ein- griff mit einem anderen Pleuelzapfen befindet;
- Fig. 9: eine Seitenansicht der Vorrichtung aus Fig. 8;
- Fig.: 10 eine perspektivische Ansicht einer zweiten Ausfüh- rungsform der Vorrichtung zur Durchführung des Ver- fahrens zum induktiven Härten von Pleuelzapfen von Kurbelwellen;
- Fig. 11: eine Schwenkeinrichtung für die Vorrichtung in einer Ausführung als Schneckentrieb; und
- Fig. 12: einen Schnitt nach der Linie XII-XII aus Fig. 11.

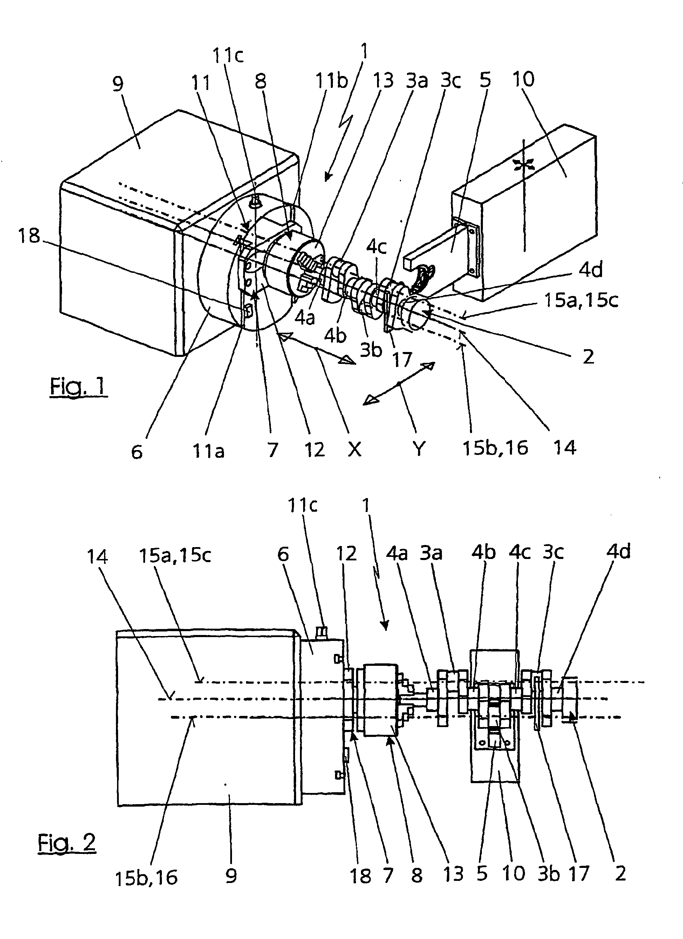

Fig. 1 zeigt in perspektivischer Darstellung eine Vorrichtung 1 zum induktiven Härten einer Kurbelwelle 2 mit im vorliegenden Fall drei Pleuelzapfen 3, nämlich den Pleuelzapfen 3a, 3b und 3c sowie mit vier Hauptlagern 4, und zwar den Hauptlagern 4a, 4b, 4c und 4d. In sämtlichen nachfolgend beschriebenen Verfahrensschritten werden lediglich die Pleuelzapfen 3a, 3b und 3c der Kurbelwelle 2 gehärtet, wobei die Hauptlager 4a, 4b, 4c und 4d der Kurbelwelle 2 jedoch ebenfalls mittels der Vorrichtung 1 gehärtet werden können, was jedoch nicht näher beschrieben wird.

Selbstverständlich ist mit der Vorrichtung 1 auch das Härten von Kurbelwellen 2 mit weniger oder mit mehr als drei Pleuelzapfen 3 möglich, wobei das im folgenden beschriebene Verfahren von einem Fachmann in sehr einfacher Weise auch auf solche Kurbelwellen 2 übertragen werden kann. Die vorliegend dargestellte Kurbelwelle 2 ist nur beispielhaft anzusehen und muß nicht notwendigerweise einer tatsächlich bei Brennkraftmaschinen verwendeten Kurbelwelle 2 entsprechen.

Die Vorrichtung 1 weist einen Induktor 5, eine Rotationseinrichtung 6, eine Verstelleinrichtung 7, eine Schwenkeinrichtung 8, einen Grundkörper 9 und einen Transformator 10 für den Induktor 5 auf. Der Induktor 5 ist auf einer nicht dargestellten Verfahreinrichtung angeordnet. Der Zweck und die Wirkungsweise dieser einzelnen Elemente der Vorrichtung 1 wird im folgenden näher beschrieben, wobei jedoch nicht auf das Grundprinzip des induktiven Härtens der Kurbelwelle 2 eingegangen wird, da dieses bereits aus dem eingangs beschriebenen Stand der Technik hinreichend bekannt ist. Grundsätzlich wird dabei in der Oberflächenzone des zu härtenden Bereichs der Kurbelwelle 2 kurzzeitig mittels hochfrequenter Spannungen ein Wirbelstrom induziert. Dadurch erwärmt sich der zu härtende Bereich an der Oberfläche sehr schnell auf eine bestimmte Härtetemperatur. Anschließend wird der Bereich durch Abschrecken mit einem Kühlmittel gehärtet.

Auf der an dem Grundkörper 9 angebrachten und in Form eines Aufnahmefutters ausgebildeten Rotationseinrichtung 6 befindet sich eine Führungsbahn 11, welche zwei parallel zueinander verlaufende Nuten 11a und 11b aufweist. Auf der Führungsbahn 11 ist ein Schlitten 12 verschieblich angebracht, der gemeinsam mit der Führungsbahn 11 die eingangs beschriebene Verstelleinrichtung 7 bildet. Der Schlitten 12 kann beispielsweise mittels einer nicht dargestellten Kurbel, die an einem Vierkant 11c angreift, entlang der Führungsbahn 11 verstellt werden. Selbstverständlich sind auch andere Verfahrmöglichkeiten für den Schlitten 12 denkbar, z.B. mittels NC- oder CNC-gesteuerter Antriebseinrichtungen, die beispielsweise elektrisch angetrieben sein können.

Auf dem Schlitten 12 ist ein als Backenfutter 13 ausgebildetes Spannmittel angebracht, welches in an sich bekannter Weise ausgebildet ist und einen Teil der in dieser Ausführungsform als mechanischer Teilapparat ausgebildeten Schwenkeinrichtung 8 darstellt. In dem Backenfutter 13 ist die Kurbelwelle 2 eingespannt, so daß sie über das Backenfutter 13 mit der Verstelleinrichtung 7 und dadurch auch mit der Rotationseinrichtung 6 verbunden ist. Auf diese Art und Weise kann durch Antreiben der Rotationseinrichtung 6 die Kurbelwelle 2 rotiert werden. Selbstverständlich könnte statt des dargestellten Backenfutters 13 auch jedes andere geeignete Spannmittel verwendet werden, wie z.B. Schwenkspanner.

Vor der Erläuterung des Verfahrens zum Härten der Kurbelwelle 2 wird zunächst auf bestimmte geometrische Gegebenheiten der Kurbelwelle 2 eingegangen: Die Kurbelwelle 2 weist eine durch die Hauptlager 4 verlaufende Mittelachse 14 und mehrere, durch die jeweiligen Pleuelzapfen 3a, 3b und 3c verlaufende Mittelachsen 15a, 15b und 15c auf. Diese Mittelachsen 15a, 15b und 15c weisen einen bestimmten, für jede einzelne Mittelachse 15a, 15b und 15c gleichen Abstand von der Mittelachse 14 auf, der dem sogenannten Hub der Kurbelwelle 2 entspricht. In Fig. 2 sind die beschriebenen geometrischen Gegebenheiten der Kurbelwelle 2 noch besser nachzuvollziehen.

Um die Hauptlager 4 der Kurbelwelle 2 in nicht dargestellter weise härten zu können, wird die durch die Hauptlager 4 verlaufende Mittelachse 14 der Kurbelwelle 2 mit der Mittelachse 16 der Rotationseinrichtung 6 fluchtend eingestellt und die Kurbelwelle mittels der Rotationseinrichtung 6 rotiert. Dann erfolgt die Zustellung des Induktors 5 mit Hilfe der Verfahreinrichtung, deren mögliche Verfahrwege durch Pfeile X und Y angedeutet sind. Es ist hierbei ein Verfahren des Induktors 5 entlang der Mittelachse 14 der Kurbelwelle 2 möglich, was dem mit X bezeichneten Pfeil entspricht. Die Zustellbewegung, also die Bewegung senkrecht zu der Mittelachse 14 in Richtung der Kurbelwelle 2, ist mit dem Pfeil Y angegeben.

Um beim Einspannen der Kurbelwelle 2 in das Backenfutter 13 die genaue Position der Pleuelzapfen 3 festzulegen bzw. nach dem erfolgten Einspannen diese Position festzustellen, ist ein gabelartiges Aufnahme- und Justierelement 17 vorgesehen. Im Regelfall nimmt das gabelartige Element 17 einen der Pleuelzapfen 3 auf, worauf das Backenfutter 13 gespannt wird. Im vorliegenden Fall wird der Pleuelzapfen 3c aufgenommen, das gabelartige Element 17 könnte selbstverständlich auch einen der anderen Pleuelzapfen 3a oder 3b aufnehmen. Wenn die Position der Kurbelwelle 2 innerhalb des Backenfutter 13 anhand der Lage der Pleuelzapfen 3 bekannt ist, kann das nachfolgend beschriebene Verfahren aufgenommen werden.

Zum Härten eines der Pleuelzapfen 3, beispielsweise wie gemäß Fig. 1 bis Fig. 7 vorgesehen des Pleuelzapfens 3b, wird die Verstelleinrichtung 7 so eingestellt, daß die Mittelachse 15b des Pleuelzapfens 3b exakt mit der Mittelachse 16 der Rotationseinrichtung 6 fluchtet bzw. identisch mit derselben ist. Hierzu wird bei der beschriebenen Ausführungsform der Schlitten 12 um den Abstand zwischen der Mittelachse 14 und den Mittelachsen 15a, 15b und 15c verstellt. Somit kann als Achse für die Rotationsbewegung der Kurbelwelle 2 die jeweilige Mittelachse 15 des jeweils zu härtenden Pleuelzapfens 3 verwendet werden, im vorliegenden Fall also die Mittelachse 15b des zu härtenden Pleuelzapfens 3b.

Bei dem Härtevorgang, der mittels des den zu härtenden Pleuelzapfen 3b ungefähr an der Hälfte seines Umfangs umschließenden Induktors 5 durchgeführt wird, rotieren dann sämtliche Hauptlager 4, das Backenfutter 13 und der Schlitten 12 mit variabler Drehzahl um die Mittelachse 15b des in diesem Fall zu härtenden Pleuelzapfens 3b, der sich in der Achse der Rotationsbewegung der Kurbelwelle 2 befindet. Wie oben beschrieben wird der Induktor 5 in Richtung des Pfeiles Y an den Pleuelzapfen 3b herangeführt, wird jedoch auf einem gewissen Abstand von demselben, dem sogenannten Kopplungsmaß gehalten. Dann erfolgt eine berührungslose Härtung des Pleuelzapfens 3b, bei dem die oben kurz beschriebenen Vorgänge ablaufen.

Selbstverständlich ist die Verwendung ein und desselben Induktors 5 für die Hauptlager 4 und die Pleuelzapfen 3 nur beispielhaft zu sehen und nur in sehr theoretischen Anwendungsfällen brauchbar, da in den meisten Fällen wohl separate Induktoren notwendig sind. Die prinzipielle Bewegung der jeweiligen Induktoren entspricht jedoch einander, so daß auf diese Art und Weise eine sehr gute Erläuterung der verfahrensgemäßen Vorgänge möglich ist. Für die Hauptlager 4 könnte zusätzlich zu den Induktoren 5 für die Pleuelzapfen 3 ein oder mehrere weitere, nicht dargestellte Induktoren mit zugehörigen Verfahreinrichtungen vorgesehen sein. Auf diese Weise könnte die Kurbelwelle 2 in einer Aufspannung fertig gehärtet werden.

Neben dem Härten der Mantelflächen des jeweiligen Pleuelzapfens 3 können mittels des Induktors 5 auch Übergangsradien zu den Kurbelwangen der Kurbelwelle 2 gehärtet werden.

Des weiteren kann es bezüglich der Wärmeverteilung innerhalb des Querschnitts der Kurbelwelle 2 vorteilhaft sein, entsprechend der geometrischen Form der sich an den jeweils zu härtenden Pleuelzapfen 3 anschließenden Kurbelwange die Leistung des Induktors 5 zu verändern. Diese Leistungsverteilung wäre der Massenverteilung im Querschnitt der Kurbelwelle 2 angepaßt, d.h. bei einer größeren Masse wäre eine höhere Leistung erforderlich.

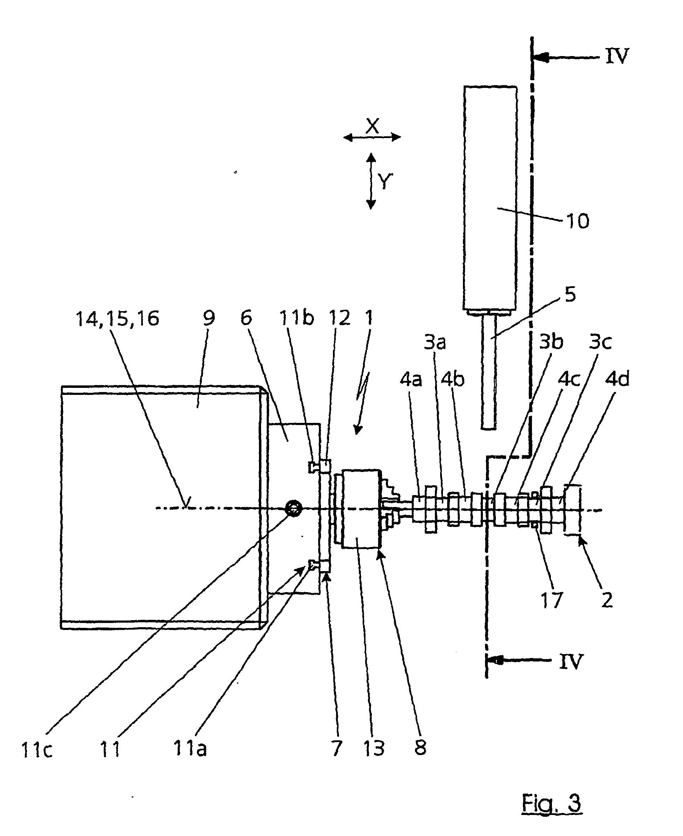

Aus der Draufsicht gemäß Fig. 3 geht der Aufbau der Kurbelwelle 2 mit den Pleuelzapfen 3 und den Hauptlagern 4 nochmals genauer hervor. Es sind in dieser Figur auch nochmals deutlich die möglichen Bewegungen des Induktors 5 mittels der Pfeile X und Y dargestellt.

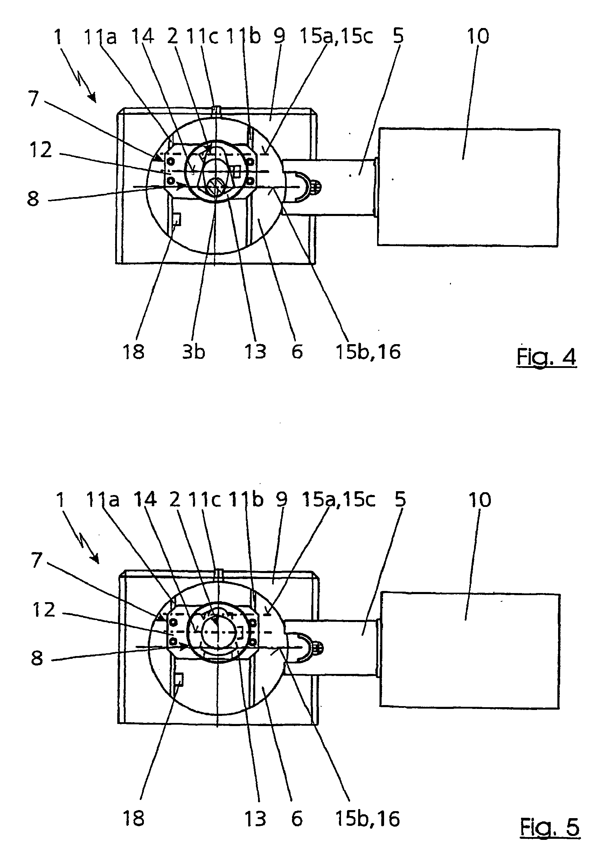

In dem Schnitt gemäß Fig. 4, der durch den zu härtenden Pleuelzapfen 3c verläuft, ist der dem Hub der Kurbelwelle 2 entsprechende Abstand zwischen der Mittelachse 14 der Hauptlager 4 und der Mittelachsen 16 und 15b der Rotationseinrichtung bzw. des Pleuelzapfens 3b, die ja miteinander fluchten bzw. aufeinanderliegen, erkennbar.

Eine sehr ähnliche Darstellung zeigt die Vorderansicht gemäß Fig. 5, wobei hier der zu härtende Pleuelzapfen 3c verdeckt ist.

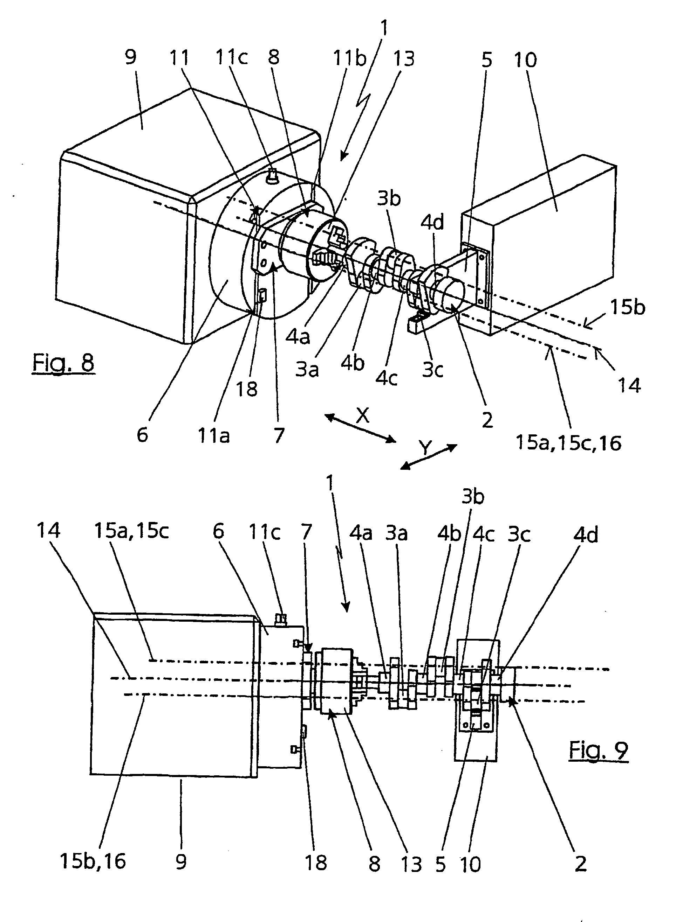

Um den nächsten Pleuelzapfen, z.B. wie in Fig. 8 dargestellt den äußeren Pleuelzapfen 3c, zu härten, wird nach dem Härtevorgang des Pleuelzapfens 3b lediglich die Schwenkeinrichtung 8 um den Winkel in Rotationsrichtung, also dem Verschränkungswinkel, zwischen dem soeben gehärteten Pleuelzapfen 3b und dem nachfolgend zu härtenden Pleuelzapfen 3c verschwenkt.

Dies wird im vorliegenden Ausführungsbeispiel durch eine beispielsweise von Hand durchgeführte Verdrehung des Backenfutters 13 realisiert. Hierzu kann eine Rasterung für das Backenfutter 13 vorgesehen sein, so daß auch bei der Verdrehung von Hand eine Fehlbedienung ausgeschlossen ist. Dann fluchtet die Mittelachse 15c des Pleuelzapfens 3c mit der Mittelachse 16 der Rotationseinrichtung 6 und der Pleuelzapfen 3c kann somit, in gleicher Weise wie zuvor der Pleuelzapfen 3b, mittels des Induktors 5 gehärtet werden. Hierzu wird lediglich der Induktor 5 mit Hilfe der Verfahreinrichtung entlang der Mittelachse 16 gemäß dem Pfeil X verfahren, worauf die Zustellung in Richtung des Pleuelzapfens 3c, also in Richtung des Pfeiles Y erfolgt. Beide genannten Bewegungen der Verfahreinrichtung können beispielsweise NC- oder CNC-gesteuert erfolgen. Während der Verfahrbewegung des Induktors 5 kann gleichzeitig auch die oben beschriebene Verschwenkbewegung der Kurbelwelle 2 erfolgen. Theoretisch ist es jeweils auch denkbar, statt des Induktors 5 die Kurbelwelle 2 in Richtung des Pfeiles X zu verfahren.

Im vorliegenden, wie bereits oben erwähnt nur theoretisch auftretenden Fall können mehrere miteinander fluchtende Pleuelzapfen 3, nämlich der Pleuelzapfen 3c und der Pleuelzapfen 3a mittels des einen Induktors 5 gehärtet werden. Sinnvollerweise werden die Pleuelzapfen 3a und 3c nacheinander gehärtet, da ihre Mittelachsen 15a und 15c identisch sind und hierdurch ein Verschwenken der Kurbelwelle 2 nicht notwendig ist. Alternativ wäre es selbstverständlich auch möglich, die miteinander fluchtenden Pleuelzapfen 3a und 3c mittels einer entsprechenden Anzahl von hier jedoch nicht dargestellten Induktoren 5 gleichzeitig zu härten, um so bei etwas erhöhtem Vorrichtungsaufwand eine gewisse Zeitersparnis zu erreichen. Je nach Anzahl und jeweiliger Anordnung der Pleuelzapfen 3 sind hier die verschiedensten Ausführungen denkbar.

Das für die Einstellung der Mittelachsen 15 der Pleuelzapfen 3 als Achse für die Rotation der Kurbelwelle 2 erforderliche Maß kann beispielsweise durch ein Endmaß gebildet sein, um dessen Länge dann die Verstelleinrichtung 7, d.h. im vorliegenden Fall der Schlitten 12 entlang der Führungsbahn 11 verstellt wird. In nicht dargestellter Weise kann dieses Endmaß z.B. an einem an der Rotationseinrichtung 6 angebrachten Anschlag 18 angelegt werden, worauf dann die Verstellung des Schlittens 12 erfolgt bis derselbe an dem Endmaß anliegt. Alternativ ist selbstverständlich auch denkbar, für verschiedene Maße zur Einstellung der Mittelachsen 15 auf die Mittelachse 16 eine nicht dargestellte Rasterung für den Schlitten 12 entlang der Führungsbahn 11 zu schaffen. Auf diese Weise könnten häufig wiederkehrende Hubmaße verschiedener Kurbelwellen 2 erfaßt werden. Die bereits oben erwähnte NC- oder CNC-Steuerung würde sich beispielsweise für einen solchen Fall anbieten.

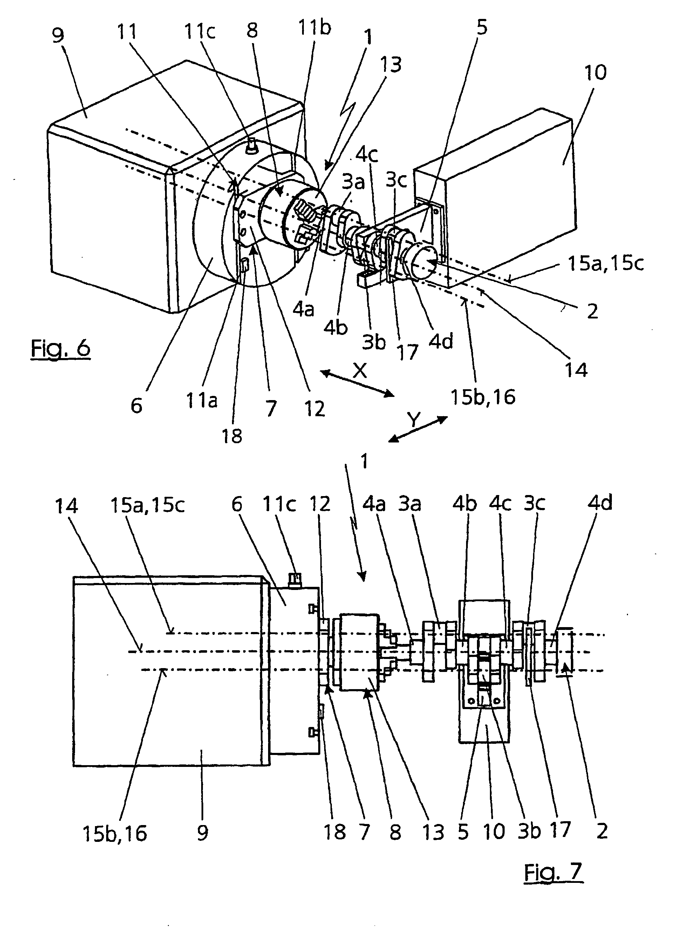

Fig. 6 und Fig. 7 zeigen die bereits in Fig. 1 bis Fig. 5 dargestellte Kurbelwelle, wobei sich der Induktor 5 jedoch in Eingriff mit dem Pleuelzapfen 3b befindet. Durch den Aufbau der Vorrichtung und die beschriebene Durchführung des Verfahrens zum Härten der Pleuelzapfen 3 der Kurbelwelle 2 ist es möglich, sehr einfach aufgebaute Induktoren 5 zu verwenden, die durch maschinelle Fertigung, beispielsweise durch Drehen und Fräsen, hergestellt sein können. Durch diese einfache Fertigung der Induktoren 5 ergibt sich ein Gewinn an Genauigkeit und dadurch an Reproduzierbarkeit, was insbesondere beim Wechseln der Induktoren 5 zum Tragen kommt.

Grundsätzlich sind auch Induktoren 5 verwendbar, die aus zwei Halbschalen bestehen und so den zu härtenden Bereich der Kurbelwelle 2 besser umschließen.

Bei der Vorrichtung 1 gemäß Fig. 8 und Fig. 9 nimmt der Induktor 5 eine Position ein, in der der Pleuelzapfen 3c gehärtet wird. Auch hierbei könnte für die Verstelleinrichtung 7 eine nicht dargestellte, beispielsweise elektrisch arbeitende Antriebseinrichtung vorgesehen sein.

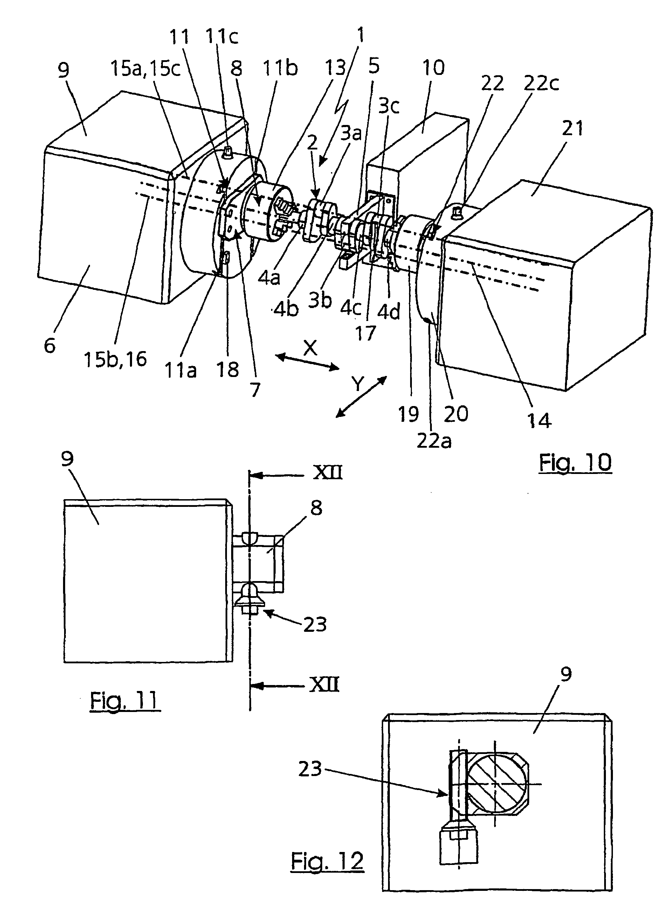

Fig. 10 zeigt die Vorrichtung 1 aus Fig. 8, wobei allerdings der Pleuelzapfen 3b gehärtet wird und außerdem die Kurbelwelle 2 an ihrer dem Backenfutter 13 gegenüberliegenden Seite in einem weiteren, ebenfalls als Backenfutter 19 ausgebildeten Spannmittel aufgenommen ist, welches über eine weitere, nicht dargestellte Verstelleinrichtung und eine der Rotationseinrichtung 6 entsprechende Rotationseinrichtung 20 an einem weiteren Grundkörper 21 angebracht ist. Dieser Aufbau bietet sich für die Vorrichtung 1 an, da ein fliegendes Aufnehmen der Kurbelwelle 2 zu großen Problemen bezüglich des Rundlaufs führen dürfte. In den Figuren 1 bis 9 wurde der zweite Grundkörper 21 mit dem zweiten Backenfutter 19 aus Gründen der Übersichtlichkeit weggelassen.

Die Kopplung der Rotation kann prinzipiell direkt über die Kurbelwelle 2 oder über eine zusätzliche, nicht dargestellte Welle erfolgen. Alternativ ist es theoretisch auch möglich, die Kurbelwelle 2 an beiden Enden anzutreiben, wobei dann eine sehr gute Abstimmung zwischen den beiden Bewegungen erforderlich ist. Die oben beschriebene Verstellung der Achsen sollte jeweils an beiden Enden der Kurbelwelle 2 getrennt erfolgen, wozu, wie bereits oben erwähnt, auf der Seite des zweiten Backenfutters 19 ebenfalls eine Verstelleinrichtung mit einer Führungsbahn 22 vorgesehen ist, von der nur eine Nut 22a und ein Vierkant 22c dargestellt sind. Zum Verschwenken der Kurbelwelle 2 wird eines der Backenfutter 13 oder 19 leicht geöffnet, wobei die Kurbelwelle 2 an ihrem geöffneten Ende durch eine nicht dargestellte Zentrierspitze gehalten wird. Dann erfolgt das Verschwenken und anschliessend das Spannen des leicht geöffneten Backenfutters 13 bzw. 19.

Des weiteren geht aus den Figuren 11 und 12 ein Schneckentrieb 23 hervor, der Teil der Schwenkeinrichtung 8 ist und beispielsweise hydraulisch oder elektrisch angetrieben sein kann. Mit Hilfe dieses Schneckentriebes 23 kann auf eine Handbedienung der Schwenkeinrichtung 8 verzichtet werden. Auch für den Schneckentrieb 23 ist gegebenenfalls eine der Ausführungen von Hand entsprechende Rasterung (nicht dargestellt) denkbar.

Das oben beschriebene Verfahren wird bei Kurbelwellen 2 des Split-Pin-Typs eingesetzt. Hierbei werden in nicht dargestellter Weise im Bereich zwischen einer Kurbelwange unmittelbar nebeneinanderliegende Pleuelzapfen 3 mittels zweier Induktoren 5 gleichzeitig gehärtet. Die Mittelachse eines der zu härtenden Pleuelzapfen 3 wird dann als Achse für die Rotationsbewegung der Kurbelwelle 2 verwendet und der andere Induktor 5 wird dem weiteren Pleuelzapfen 3 nachgeführt, wobei jedoch nur eine sehr geringe Exzentrizität zu überwinden ist.

Sollte die zu härtende Kurbelwelle 2 einen Rundschlag aufweisen, so ist selbstverständlich der Einsatz einer nicht dargestellten Stützlünette in einem mittleren Bereich der Kurbelwelle 2 möglich. Die Stützlünette sollte dabei möglichst an einem Pleuelzapfen 3 angreifen, der dieselbe Mittelachse 15 wie der in diesem Moment zu härtende Pleuelzapfen 3 besitzt, oder direkt an dem zu härtenden Pleuelzapfen 3. Ebenfalls denkbar ist es, das Spannmittel 13 bzw. 19 durch geeignete Maßnahmen örtlich näher an den zu härtenden Pleuelzapfen 3 zu bewegen, was sich beispielsweise im Falle von Schwenkspannern anbietet. Wie oben erwähnt kann durch die größere Umschlingung und das dadurch größer wählbare Kopplungsmaß der durch den Rundschlag gegebenenfalls entstehenden Berührungsgefahr zwischen dem Induktor 5 und der Kurbelwelle 2 entgegengewirkt werden.

Grundsätzlich können die Pleuelzapfen 3 und die Hauptlager 4 in einer einzigen Vorrichtung 1 gehärtet werden, wenn die hierfür notwendigen Induktoren 5 untergebracht werden können. Meist bietet es sich jedoch an, die mechanisch aufwendiger zu härtenden Pleuelzapfen 3 und die mechanisch einfacher zu härtenden Hauptlager 4 in separaten Vorrichtungen zu härten, wobei diese dann modulartig miteinander verbunden sein können. Dies führt dann zu einer Reduzierung der Taktzeit.

## Patentansprüche

1. Vorrichtung zum induktiven Härten von Pleuelzapfen von Kurbelwellen (2) des Split-Pin-Typs mit wenigstens zwei Hauptlagern (4), wobei wenigstens zwei Pleuelzapfen (3) unmittelbar nebeneinander liegen, mit folgenden Merkmalen:
- wenigstens zwei Induktoren (5) für die jeweils zu härtenden unmittelbar nebeneinander liegenden Pleuelzapfen (3),
- wenigstens einer Rotationseinrichtung (6) zum Erreichen einer Drehbewegung der Kurbelwelle (2),
- wenigstens einer Verstelleinrichtung (7), die die Kurbelwelle (2) aufnimmt und die dazu in der Lage ist, die Mittelachse (15) eines Pleuelzapfens (3) der Kurbelwelle (2) als Achse für die Rotationsbewegung der Kurbelwelle (2) einzustellen,
- mit einer Nachführeinrichung zur Nachführung des Induktors (5) für den anderen Pleuelzapfen,
- die beiden Induktoren (5) arbeiten berührungslos und umschließen die zu härtenden Pleuelzapfen (3) jeweils nur an der Hälfte ihres Umfanges; und härten die nebeneinanderliegenden Pleuelzapfen gleichzeitig
- mit einem an der Rotationseinrichtung (6) angebrachten Anschalg (18) und einem an dem Anschlag (18) anlegbaren Endmaß zur Verstellung der Verstelleinrichtung (7) zur Einstellung der Mittelachse (15) des zu Härtenden Pleuelzapfens (3) der Kurbelwelle (2) als Achse für die Rotation der Kurbelwelle (2),
- mit einem gabelartigen Aufnahme- und Justierelement (17) zur Aufnahme eines der Pleuelzapfen (3) zur Ausrichtung der Kurbelwelle (2) vor dem Härten.

2. Vorrichtung nach Anspruch 1,
**dadurch gekennzeichnet, dass**
wenigstens eine Schwenkeinrichtung (8) vorgesehen ist, welche in der Lage ist, die Kurbelwelle (2) um einen bestimmten Winkel um ihre Mittelachse (14) zu verschwenken.

3. Vorrichtung nach Anspruch 2,
**dadurch gekennzeichnet, dass**
die wenigstens eine Schwenkeinrichtung (8) einen mechanischen Schneckentrieb (23) aufweist.

4. Vorrichtung nach Anspruch 3,
**dadurch gekennzeichnet, dass**
der Schneckentrieb (23) elektrisch oder hydraulisch angetrieben ist.

5. Vorrichtung nach Anspruch 2,
**dadurch gekennzeichnet, dass**
die wenigstens eine Schwenkeinrichtung (8) ein Spannmittel (13) zur Aufnahme der Kurbelwelle (2) aufweist.

6. Vorrichtung nach einem der Ansprüche 1 bis 5,
**dadurch gekennzeichnet, dass**
die wenigstens eine Verstelleinrichtung (7) einen Schlitten (12) aufweist, welcher mittels einer Kurbel entlang einer Führungsbahn (11) senkrecht zu der Mittelachse (14) der Kurbelwelle (2) verstellbar ist.

7. Vorrichtung nach einem der Ansprüche 1 bis 6,
**dadurch gekennzeichnet, dass**
für verschiedene Maße zur Einstellung der Mittelachse (15) des zu härtenden Pleuelzapfens (3) der Kurbelwelle (2) als Achse für die Rotation der Kurbelwelle (2) eine Rasterung vorgesehen ist.

## Claims

1. Apparatus for effecting the induction hardening of crank pins of crankshafts (2) of the split-pin type having at least at least two main bearings (4), wherein at least two crank pins (3) lie immediately adjacent to one another, having the following features:
- at least two inductors (5) for the crank pins (3) lying immediately adjacent to one another that are to be hardened in each case,
- at least one rotation device (6) for achieving a rotational movement of the crankshaft (2),
- at least one adjusting device (7), which receives the crankshaft (2) and which is capable of setting the centre line (15) of a crank pin (3) of the crankshaft (2) as an axis for the rotational movement of the crankshaft (2), having a tracking device for tracking the inductor (5) for the other crank pin,
- the two inductors (5) operate without contact and enclose in each case only half of the periphery of the crank pins (3) to be hardened and harden the mutually adjacent crank pins simultaneously
- having a stop (18) mounted on the rotation device (6) at well as an end measure that may be laid against the stop (18) to adjust the adjusting device (7) for setting the centre line (15) of the crank pin (3) of the crankshaft (2) to be hardened as an axis for the rotation of the crankshaft (2),
- having a fork-like receiving and aligning element (17) for receiving one of the crank pins (3) for alignment of the crankshaft (2) prior to hardening.

2. Apparatus according to claim 1,
**characterized in that**
at least one swivelling device (8) is provided, which is capable of swivelling the crankshaft (2) through a specific angle about its centre line (14).

3. Apparatus according to claim 2,
**characterized in that**
the at least one swivelling device (8) comprises a mechanical worm drive (23).

4. Apparatus according to claim 3,
**characterized in that**
the worm drive (23) is driven electrically or hydraulically.

5. Apparatus according to claim 2,
**characterized in that**
the at least one swivelling device (8) comprises a clamping means (13) for receiving the crankshaft (2).

6. Apparatus according to one of claims 1 to 5,
**characterized in that**
the at least one adjusting device (7) comprises a slide (12), which is adjustable by means of a crank along a guideway (11) at right angles to the centre line (14) of the crankshaft (2).

7. Apparatus according to one of claims 1 to 6,
**characterized in that**
for various measures for setting the centre line (15) of the crank pin (3) of the crankshaft (2) to be hardened as the axis for the rotation of the crankshaft (2) a grid system is provided.

## Revendications

1. Dispositif de trempe inductive de manetons de vilebrequins (2) du type Split-Pin qui comprennent au moins deux tourillons principaux (4), dans lequel au moins deux manetons (3) sont immédiatement adjacents, et qui présente les caractéristiques suivantes ;
- au moins deux inducteurs (5) respectivement pour les deux manetons immédiatement (3) adjacents à tremper,
- au moins un dispositif de rotation (6) pour déterminer un mouvement de rotation du vilebrequin (2),
- au moins un dispositif réglable (7) qui reçoit le vilebrequin (2) et qui est pour cela capable de placer l'axe central (15) d'un maneton (3) du vilebrequin (2) en position pour servir d'axe du mouvement de rotation du vilebrequin (2),
- un dispositif de poursuite pour le mouvement de poursuite de inducteur (5) prévu pour l'autre maneton,
- les deux inducteurs (5) travaillent sans contact et entourent respectivement les manetons (3) à tremper seulement sur la moitié de leur circonférence et ils trempent simultanément les manetons adjacents,
- une butée (18) montée sur le dispositif de rotation (6), et une cote extrême pouvant être appliquée à la butée (18) pour le réglage du dispositif réglable (7) afin de fixer l'axe central (15) du maneton (3) du vilebrequin (2) qu'il s'agit de tremper comme axe pour la rotation du vilebrequin (2),
- un élément de réception et d'ajustement (17) en forme de fourche destiné à recevoir un des manetons (3) pour assurer l'alignement du vilebrequin (2) avant la trempe.

2. Dispositif selon la revendication 1,
**caractérisé en que**
il est prévu au moins un dispositif de pivotement (8) agencé pour faire pivoter le vilebrequin (2) d'un angle déterminé autour de son axe central (14).

3. Dispositif selon la revendication 2,
**caractérisé en ce que**
le au moins un dispositif de pivotement (8) comporte un entraînement mécanique à vis sans fin (23).

4. Dispositif selon la revendication 3,
**caractérisé en ce que**
l'entraînement à vis sans fin (23) est entraîné électriquement ou hydrauliquement.

5. Dispositif selon la revendication 2,
**caractérise en ce que**
le au moins un dispositif de pivotement (8) comporte un moyen de serrage (13) pour recevoir le vilebrequin (2).

6. Dispositif selon l'une des revendications 1 à 5,
**caractérisé en ce que**
le au moins un dispositif réglable (7) comprend un chariot (12) qui peut être réglé perpendiculairement à l'axe central (14) du vilebrequin (2) le long d'une vole de guidage (11) au moyen d'une manivelle,

7. Dispositif selon l'une des revendications 1 à 6,
**caractérisé en ce que**
il est prévu un crantage pour différentes cotes pour l'utilisation de l'axe central (15) du maneton (3) du vilebrequin (2) qu'il s'agit de tremper comme axe pour la rotation du vilebrequin (2),
